# EUROPÄISCHE PATENTSCHRIFT

(11) **EP 0 993 792 B1**
(45) Veröffentlichungstag und Bekanntmachung des Hinweises auf die Patenterteilung: **21.07.2004**
(21) Anmeldenummer: 99118444.1
(22) Anmeldetag: 17.09.1999
(51) Int. Cl.: A47B 47/00, A47B 96/14

(54) **Profilanordnung zum Aufbau von Ausstellungs- oder Ladeneinrichtungen**
Extrusion arrangement to construct presentation or shop layouts
Arrangement de profilés pour construire des dispositions de présentation et ou de magasins

(30) Priorität: 16.10.1998 DE 29818474 U
(43) Veröffentlichungstag der Anmeldung: 19.04.2000
(60) Teilanmeldung: 03005584.2
(73) Patentinhaber: OCTANORM-VERTRIEBS-GMBH FÜR BAUELEMENTE, 70794 Filderstadt (DE)
(72) Erfinder: Bruder, Hans, 72631 Aichtal-Aich (DE)
(74) Vertreter: Patentanwälte Ruff, Wilhelm, Beier, Dauster & Partner

(56) Entgegenhaltungen:
- EP-A- 0 843 103
- FR-A- 1 363 195
- FR-A- 2 039 207
- FR-A- 2 461 140
- US-A- 4 768 845

## Beschreibung

Die Erfindung betrifft eine Profilanordnung zum Aufbau von Ausstellungs- oder Ladeneinrichtungen nach dem Oberbegriff des Patentanspruchs 1.

Eine Profilanordnung dieser Art ist aus der EP 0 843 103 A2 bekannt. Die dort vorgesehenen Profile sind auf ihren Seitenflächen mit Nuten versehen, in die z.B. Trennscheiben eingesetzt werden können, die in einem von vier Profilen gebildeten Rahmen gehalten werden. Die Profile selbst sind durch Eckstücke zusammengehalten, die mit geriffelten Zapfen in Durchgangsbohrungen der Profile eingeschlagen werden.

Es sind auch Profile bekannt (Newline System der Octanorm- Vertriebs-GmbH für Bauelemente, Filderstadt), die aus Leichtmetall bestehen und in verschiedener Oberflächenqualität angeboten werden, die von eloxiertem Aluminium bis zu farbig beschichteten Profilen reichen. Eine Vielfalt von Kombinationsmöglichkeiten wird dadurch geschaffen.

Der vorliegenden Erfindung liegt die Aufgabe zugrunde, die Vielfalt solcher Profile noch zu erweitern und eine Möglichkeit vorzusehen, Laden- oder Ausstellungseinrichtungen auch so zu gestalten, dass sie das Aussehen von mit Holz hergestellten Einrichtungen erhalten oder durch zusätzliche unterschiedliche Farbgebungen die Ästhetik verbessern.

Zur Lösung dieser Aufgabe werden bei einem Profil der eingangs genannten Art die kennzeichnenden Merkmale des Patentanspruches 1 vorgesehen. Durch diese Ausgestaltung wird es beispielsweise möglich, aus Holz bestehende Leisten oder Leisten aus Kunststoff, die eine Holzwirkung haben, in die Ausnehmungen der Leichtmetallprofile und der Eckstücke einzuschieben, um dadurch besondere ästhetische Effekte zu erreichen und den Laden- oder Ausstellungseinrichtungen das Aussehen von wertvollen Holzeinrichtungen zu verleihen.

Bei einer Ausführungsform kann nun vorgesehen werden, daß jede Seitenfläche mit einer Ausnehmung in der Form einer breiten und flachen Nut versehen ist, deren Ränder von Teilen der Seitenflächen der Profilteile übergriffen werden und daß in diese Nut eine flache Leiste, vorzugsweise eine solche, die im Querschnitt rechteckig ist, eingeschoben ist. Dabei kann in Weiterbildung der Erfindung diese Nut eine Art Schwalbenschwanznut für die entsprechend abgeschrägten Kanten der Leisten bilden.

Bei dieser Ausführungsform wird das zur Verbindung der Profile dienende Eckstück an mindestens drei mit den Seitenflächen der Profile fluchtenden Seiten mit der Nut entsprechenden Ausnehmungen versehen, wobei bei einer bevorzugten Ausführungsform das Eckstück als ein Würfel mit von zwei Seitenflächen abstehenden Zapfen ausgebildet sein kann, wobei von diesen Seitenflächen aus jeweils in drei angrenzende Seitenflächen Ausnehmungen hereinragen, die im Querschnitt dem der Nut der Profile entsprechen und jeweils an einer die Seitenflächen gegeneinander abgrenzenden Querkante enden.

Durch diese Ausgestaltung verbleiben an den Kanten der zu Laden- oder Ausstellungseinrichtungen zusammengesetzten Profile optisch metallische Streifenelemente, die von den eingesetzten Leisten, also beispielsweise von Holz, im mittleren Bereich der Profile abgesetzt sind. Es entsteht eine ästhetisch sehr ansprechende Wirkung.

Die Erfindung ist anhand eines Ausführungsbeispieles in der Zeichnung dargestellt und wird im folgenden erläutert. Es zeigen:
- Fig. 1: eine Explosionsdarstellung von zwei Profilen nach der Erfindung, die über ein Eckstück zusammensetzbar sind und
- Fig. 2: die nach dem Zusammensetzen der Profile der Fig. 1 gebildete Ecke.

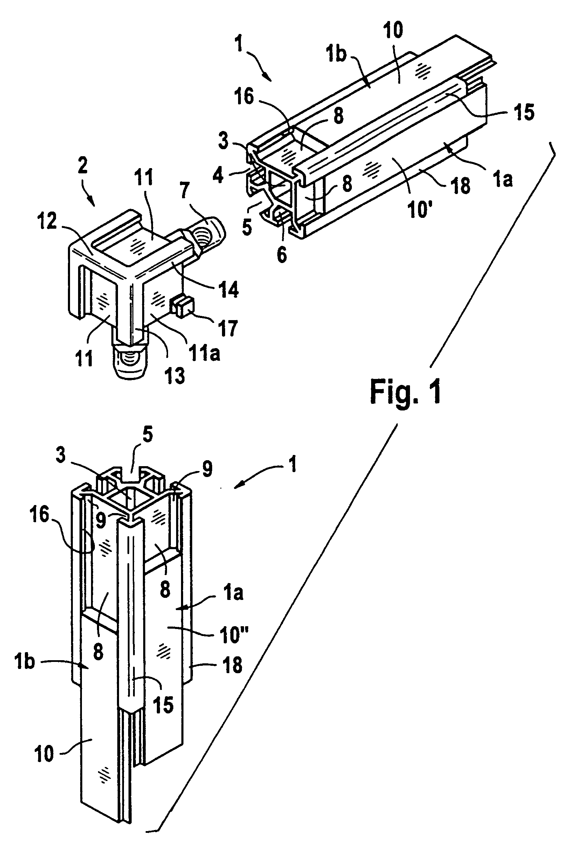

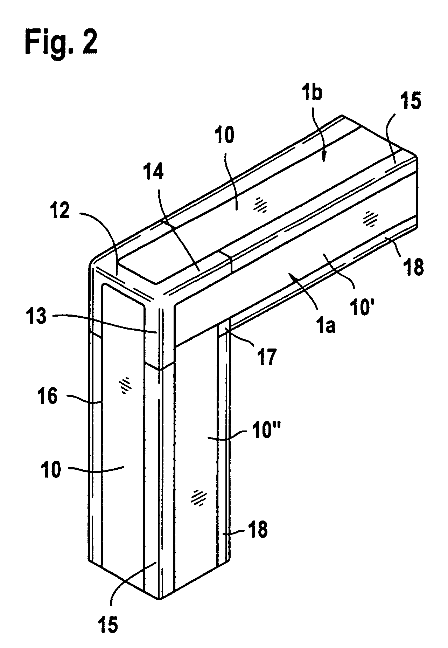

Die Fig. 1 zeigt zwei gezogene Metallprofile 1, beispielsweise aus Aluminium, die durch ein Eckstück 2 untereinander zu der in der Fig. 2 gezeigten Winkelstruktur verbindbar sind. Die Profile 1 dienen dabei beispielsweise zur Herstellung von Vitrinen oder Schaukästen für Ladeneinrichtungen o.dgl.

Jedes der Profile 1 besitzt eine mittlere Hohlkammer 3 sowie drei nach außen offene Hohlkammem 4, 5 und 6, von denen die Hohlkammer 5 und die Hohlkammer 3 zur Aufnahme eines zweiteiligen Zapfens 7 dienen, der an dem Eckstück 2 befestigt ist. Die Hohlkammern 4, 5 und 6 sind jeweils nach außen offen. Insbesondere in die offenen Schlitze der Hohlkammern 4 und 5 können Verkleidungsplatten, oder auch andere Bauelemente eingeschoben und gehalten werden.

Jedes der Profile 1 besitzt zwei unter 90° zueinanderstehende Seitenflächen 1a und 1b, in denen jeweils eine nahezu über die gesamte Breite der Seitenfläche durchgehende Nut 8 eingearbeitet ist, die eine Art Schwalbenschwanzprofil mit hinterschnittenen und von den verbliebenden Teilen der Seitenwände 1a und 1b übergriffenen Rändern 9 aufweist. In diese flachen Schwalbenschwanznuten 8 sind jeweils flache Leisten 10 aus einem anderen Material als die Profile 1 eingeschoben, wobei diese Leisten 10 angeschrägte Ränder zum Einsetzen in die Ränder 9 der Nut aufweisen. Die Leisten 10 können beispielsweise aus Holz bestehen, und sie geben daher dem Profil ein besonders ästhetisches Aussehen, das von den verbleibenden Metallkanten der Seitenflächen 1a und 1b mit der dazwischen liegenden Holzstruktur geprägt ist.

Das Eckstück 2 ist würfelförmig ausgebildet und besitzt auf den jeweils den Seitenflächen 1a und 1b der Profile 1 zugewandeten Seiten Ausnehmungen 11, deren Querschnitt der Querschnittsform der Nuten 8 entspricht. Diese Ausnehmungen 11 und 11a erstrecken sich so weit in die zugeordneten Würfelflächen hinein, wie es der Breite der Leisten 10 entspricht. Im zusammengesetzten Zustand nach Fig. 2 reichen die beiden außen liegenden Leisten 10 bis zu der im Eckstück 2 gebildeten Außenkante 12, die Leiste 10' bis zu der Seitenkante 13 des Eckstückes 2 und die Leiste 10" bis zum Anschlag an der Leiste 10'. Es ist natürlich auch möglich, die Leiste 10" bis zum Anschlag an der Kante 14 zu schieben und die Leiste 10' an der Leiste 10" anschlagen zu lassen. In jedem Fall bilden die Seitenkanten 13, 14 des Eckstückes 2 und die damit fluchtenden Kanten 15 der Seitenflächen 1a und 1b eine metallisch durchgehende Kante, die ergänzt wird durch die innenliegenden Kanten 16, so daß die dazwischen eingefügten Holzleisten 10, 10', 10" mit den Profilen zusammen einen besonderen Effekt bringen, der insbesondere zum Aufbau von Ladeneinrichtungen sehr ästhetisch und ansprechend ist. Zu erkennen ist, daß das Eckstück 2 zur Erzielung dieses Effektes am vorderen Rand der Ausnehmung 11a einen quaderförmigen Eckvorsprung 17 aufweist, der die Verbindung zu den verbleibenden Innenkanten 18 der Profile 1 im zusammengesetzten Zustand herstellt.

Die Leisten 10, 10' und 10" können natürlich auch aus einem anderen Material als aus Holz bestehen. Auch farbige Kunststoffleisten können in Verbindung mit dem Aluminiumprofil 1 und dem Eckverbinder 2 besondere ästhetische Effekte bewirken.

## Patentansprüche

1. Profilanordnung zum Aufbau von Ausstellungs- oder Ladeneinrichtungen mit mindestens einem Eckstück und zwei mehreckigen Profilen, die jeweils mit mindestens einer stirnseitig offenen Hohlkammer (3) versehen und jeweils durch Eckstücke (2), die mit abstehenden Zapfen (7) in die Hohlkammern (3) eingreifen, mit anderen Profilteilen (1) verbindbar sind, wobei das Eckstück (2) an jeder der mit den Profilseitenflächen fluchtenden Seiten mit Ausnehmungen (11) versehen ist und an mindestens zwei zu einer Kante aneinanderstoßenden Seitenflächen (1 a, 1 b) jedes Profiles eine über die Profillänge durchgehende Ausnehmung (8) vorgesehen ist,
**dadurch gekennzeichnet, dass**
der Querschnitt der Ausnehmungen (11) der Eckstücke (2) der Querschnittsform der Ausnehmungen (8) der Profile entspricht und in die Ausnehmungen (8, 11) eine aus einem anderen Werkstoff als der des Profils (1) bestehende Leiste (10) einschiebbar ist.

2. Profilanordnung nach Anspruch 1, **dadurch gekennzeichnet, dass** jede Seitenfläche (1a, 1b) mit einer Ausnehmung in der Form einer breiten Nut (8) versehen ist, deren Rändern (9) von Teilen der Seitenfläche (1b, 1a) der Profile (1) übergriffen sind und dass in diese Nut (8) jeweils eine flache, im Querschnitt rechteckige Leiste (10, 10', 10") eingeschoben ist.

3. Profilanordnung nach Anspruch 2, **dadurch gekennzeichnet, dass** die Nut (8) in der Art einer Schwalbenschwanznut für entsprechend abgeschrägte Kanten der Leisten (10) ausgebildet ist.

4. Profilanordnung nach Anspruch 2, **dadurch gekennzeichnet, dass** das Eckstück (2) an mindestens drei mit den Seitenflächen (1a,1b) der Profile (1) fluchtenden Seiten mit Vertiefungen (11a) entsprechend den Nuten (8) versehen ist.

5. Profilanordnung nach Anspruch 4, **dadurch gekennzeichnet, dass** das Eckstück (2) ein Würfel mit von zwei Seitenflächen abstehenden Zapfen (7) ist, der mit von diesen Seitenflächen jeweils in drei angrenzende Seitenflächen hereingeführten Ausnehmungen (11, 11a) versehen ist, die im Querschnitt dem der Nut (8) der Profile (1) entsprechen und jeweils an einer die Seitenflächen gegeneinander abgrenzenden Querkante (12, 14) enden.

## Claims

1. Section arrangement for constructing exhibition or shop fittings having at least one corner piece and two polygonal sections each provided with at least one hollow chamber (3) open at the front end and each connectable to other section parts (1) by corner pieces (2) engaging with projecting tenons (7) in the hollow chambers (3), where said corner piece (2) is provided on each of the sides flush with the section side surfaces with recesses (11) and where a recess (8) is provided over the full section length on at least two lateral faces (1a, 1b) of each section that adjoin an edge,
**characterized in that**
the cross-section of the recesses (11) of the corner pieces (2) matches the cross-sectional shape of the recesses (8) of the sections and **in that** a strip (10) comprising a different material to that of the section (1) can be slid into the recesses (8, 11).

2. Section arrangement according to Claim 1, **characterized in that**
each lateral face (1a, 1b) is provided with a recess in the form of a wide groove (8) whose edges (9) are enclosed by parts of the lateral faces (1a, 1b) of the sections (1) and **in that** a flat strip (10, 10', 10") of rectangular cross-section is slid into each groove (8).

3. Section arrangement according to Claim 2, **characterized in that**
the groove (8) is shaped like a kind of dovetail groove for correspondingly chamfered edges of the strips (10).

4. Section arrangement according to Claim 2, **characterized in that**
the corner piece (2) is provided with recesses (11a) matching the grooves (8) on at least three sides flush with the lateral faces (1a, 1b) of the sections (1).

5. Section arrangement according to Claim 4, **characterized in that**
the corner piece (2) is a cube with tenons (7) protruding from two lateral faces and provided with recesses (11, 11a) introduced from said lateral faces into three adjacent lateral faces and having a cross-section matching that of the grooves (8) of the sections and each ending at a transverse edge (12, 14) separating the lateral faces from one another.

## Revendications

1. Arrangement de profilés pour construire des dispositions de présentation et/ou de magasins avec au moins un coin et deux profilés polygonaux, chacun étant muni d'au moins une cavité frontale ouverte (3) et pouvant être relié avec d'autres profilés (1) par des coins (2) qui s'engagent dans les cavités (3) avec des tenons (7), sachant que le coin (2) est muni d'évidements (11) sur chacun des côtés s'alignant sur les surfaces latérales des profilés, et que sur au moins deux des surfaces latérales (1a, 1b) de chaque profilé se touchant sur une arête est prévu un évidement (8) s'étendant sur toute la longueur du profilé,
**caractérisé en ce que**
la section des évidements (11) des coins (2) correspond à la forme de la section des évidements (8) des profilés et qu'une baguette (10) constituée d'un autre matériau que celui du profilé (1) peut être insérée dans les évidements (8, 11).

2. Arrangement de profilés selon la revendication 1, **caractérisé en ce que** chaque surface latérale (1a, 1b) est munie d'un évidement ayant la forme d'une large rainure (8) dont les bords (9) sont recouverts par des parties des surfaces latérales (1b, 1 a) des profilés (1), et que dans chaque rainure (8) est insérée une baguette plate ayant une section rectangulaire (10, 10', 10").

3. Arrangement de profilés selon la revendication 2, **caractérisé en ce que** la rainure (8) est formée à la manière d'une rainure en queue d'aronde pour des arêtes biseautées en conséquence des baguettes (10).

4. Arrangement de profilés selon la revendication 2, **caractérisé en ce que** le coin (2) est muni d'évidements (11a) correspondants aux rainures (8) sur au moins trois côtés s'alignant sur les surfaces latérales (1a, 1b) des profilés (1).

5. Arrangement de profilés selon revendication 4, **caractérisé en ce que** le coin (2) est un cube avec deux tenons (7) faisant saillie sur deux surfaces latérales, qui est muni d'évidements (11, 11a) respectivement pratiqués à partir de ces surfaces latérales dans trois surfaces latérales adjacentes et dont la section correspond à celle de la rainure (8) des profilés (1), et qui se terminent respectivement sur une arête transversale (12, 14) limitant les surfaces latérales les unes par rapport aux autres.
